## Europäisches Patentamt

## European Patent Office

## Office européen des brevets

(11) Veröffentlichungsnummer: **0 377 148 B1**

## EUROPÄISCHE PATENTSCHRIFT

(45) Veröffentlichungstag der Patentschrift: **12.07.95**

(21) Anmeldenummer: **89123088.0**

(22) Anmeldetag: **14.12.89**

(51) Int. Cl.6: **B32B 27/08**, C08L 27/06, B32B 27/30

Die Akte enthält technische Angaben, die nach dem Eingang der Anmeldung eingereicht wurden und die nicht in dieser Patentschrift enthalten sind.

(54) **Folie, insbesondere tiefziehfähige Folie für Kraftfahrzeuginnenräume.**

(30) Priorität: **03.01.89 DE 3900064**

(43) Veröffentlichungstag der Anmeldung:
**11.07.90 Patentblatt 90/28**

(45) Bekanntmachung des Hinweises auf die Patenterteilung:
**12.07.95 Patentblatt 95/28**

(84) Benannte Vertragsstaaten:
**AT BE CH DE ES FR GB GR IT LI LU NL SE**

(56) Entgegenhaltungen:
**EP-A- 0 099 455**
**DE-U- 8 709 369**

(73) Patentinhaber: **ALKOR GMBH KUNSTSTOFFE**
**Postfach 71 01 09,**
**Morgensternstrasse 9**
**D-81451 München (DE)**

(72) Erfinder: **Fink, Roland, Dipl.-Ing.**
**Dinard Strasse 6b**
**D-8130 Starnberg (DE)**
Erfinder: **Huber-Hesselberger, Joseph,**
**Chem.-Ing.**
**Behring Strasse 113**
**D-8000 München 50 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine tiefziehfähige Verbundfolie für Kraftfahrzeuginnenräume mit einer Foliendicke von 500 bis 1800 $\mu$m, bestehend aus mindestens einer Unterfolie oder Unterschicht und mindestens einer Oberfolie oder Oberschicht, wobei mindestens eine Unterfolie oder Unterschicht bzw. mindestens eine Oberfolie oder Oberschicht aus Mischungen von Vinylchloridhomo-, -co-, -ter- und/oder -pfropfpolymerisat, Styrol-Co- oder -pfropfpolymerisat besteht sowie einem Plastifiziermittelgemisch auf der Basis eines plastifizierenden Hochpolymeren mit polaren Gruppen, die mit Polyvinylchlorid eine Phase bildet, gegebenenfalls mit einer an der Verbundfolie angeordneten Schaumschicht oder Hinterschäumung, wobei mindestens eine weitere Oberfolie oder Oberflächenschicht bzw. eine weitere Unterfolie oder Unterschicht auf der Basis eines Polymeren oder Polymergemisches besteht sowie einem Plastifiziermittelgemisch auf der Basis plastifizierenden Hochpolymeren mit polaren Gruppen, die mit Polyvinylchlorid eine Phase bildet, wobei das polare Gruppen aufweisende Plastifiziermittelgemisch der Unter- und Oberfolie ein Molekulargewicht größer als 100.000 aufweist und mindestens einem Alken- oder Alkenyl ($C_2$ - $C_4$) - Alkyl ($C_1$ - $C_8$)-Acrylat-Kohlenmonoxid-Terpolymerisat, Alken- oder Alkenyl ($C_2$ - $C_4$) - Alkyl ($C_1$ -$C_8$)-Methacrylat-Kohlenmonoxid-Terpolymerisat, Alken- oder Alkenyl ($C_2$ - $C_4$) - Alkyl ($C_1$ - $C_8$)-Acrylat-Copolymerisat; Alken- oder Alkenyl ($C_2$ - $C_4$) - Alkyl ($C_1$ - $C_8$)-Methacrylat-Copolymerisat besteht, mit einem Alkyl-Acrylat-Gehalt oder Alkyl-Methacrylat-Gehalt von mehr als 12 Gew.-% (berechnet auf das jeweilige polare Gruppe enthaltende Plastifiziermittel mit 100 Gew.-Teilen) und mit statistisch verteilten Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen.

Gemäß der Erfindung werden bestimmte Mischungsverhältnisse der kohlenmonoxidgruppenhaltigen und nicht kohlenmonoxidhaltigen Plastifiziermittel zueinander und bestimmte Gewichtsverhältnisse dieser zu aromatischen Carbonsäureestern eingehalten.

Aus der DE-U-8709369 sind bereits tiefziehfähige Folien für Kraftfahrzeuginnenräume mit einer Foliendicke von 500 bis 1800 $\mu$m bekannt, bestehend aus Mischungen von Vinylchloridhomo-, -co-, -ter- und/oder -pfropfpolymerisat, Styrol-Co- oder -pfropfpolymerisat sowie einem Plastifiziermittel auf der Basis eines plastifizierenden Hochpolymeren mit polaren Gruppen, das ein Molekulargewicht von größer als 100.000 aufweist und mit Polyvinylchlorid verträglich ist oder eine Phase bildet. Das polare Gruppen aufweisende Plastifiziermittel oder Plastifiziermittelgemisch weist ein Molekulargewicht von größer als 100.000 auf und besteht aus mindestens einem Alken- oder Alkenyl ($C_2$ - $C_4$) - Alkyl ($C_1$ - $C_8$)-Acrylat-Kohlenmonoxid-Terpolymerisat, Alken- oder Alkenyl ($C_2$ - $C_4$) - Alkyl ($C_1$ - $C_8$)-Methacrylat-Kohlenmonoxid-Terpolymerisat, Alken- oder Alkenyl ($C_2$ - $C_4$) - Alkyl ($C_1$ - $C_8$)-Acrylat-Copolymerisat; Alken- oder Alkenyl ($C_2$ - $C_4$) - Alkyl ($C_1$ - $C_8$)-Methacrylat-Copolymerisat. Bestimmte Gewichtsverhältnisse dieser Verbindungen zueinander sind jedoch nicht einzuhalten.

Aus der EPA-A-0099455 sind bereits Verbundfolien, insbesondere tiefziehfähige Folien, für Kraftfahrzeuginnenräume und daraus hergestellte Formkörper oder Formkörperteile für den Kraftfahrzeuginnenraum bekannt, wobei die Folien gegebenenfalls auf einer Seite hinterschäumt sind.

Die tiefziehfähigen, ungeschäumten Verbundfolien weisen eine bestimmte Dicke auf und sind laminiert und in Form von Zwei- oder Mehrfachschichten aufgebaut und bestehen aus einer oder mehreren weichmacherfreien oder weichmacherarmen Unterfolien aus Mischungen von Polyvinylchlorid, Acrylnitril-Butadien-Styrol-Copolyrnerisaten sowie einem Plastifiziermittel auf der Basis eines plastifizierenden Hochpolymeren sowie gegebenenfalls einem anderen Kunstharz, vorzugsweise auf der Basis von Acrylnitril-Copolymerisat und einer weichmacherfreien oder weichmacherarmen Oberfolie mit einer bestimmten Dicke aus Polyvinylchlorid sowie einem Plastifiziermittel auf der Basis eines plastifizierenden Hochpolymeren sowie gegebenenfalls einem anderen Kunstharz, vorzugsweise einem Acrylnitril-Copolymerisat.

Das Acrylnitril-Copolymerisat besteht vorzugsweise aus Styrol-Acrylnitril-Copolymerisat und/oder Acrylnitril-Butadienharz.

Das Dickenverhältnis von Oberfolie zu Unterfolie beträgt 1 : 1 bis 1 : 8, vorzugsweise 1 : 3 bis 1 : 7. Bestimmte Gewichtsverhältnisse der Plastifiziermittel untereinander sind nach dieser Veröffentlichung nicht einzuhalten.

Gemäß der vorliegenden Erfindung wird die tiefziehfähige Verbundfolie der eingangs genannten Art für Kraftfahrzeuginnenräume so ausgebildet, daß von den mindestens zwei in der jeweiligen Oberfolie oder Oberschicht und Unterfolie oder Unterschicht enthaltenden hochmolekularen und polare Gruppen enthaltenden Plastifiziermitteln eines ein kohlenmonoxidgruppenhaltiges Plastifiziermittel ist und das andere ein nicht kohlenmonoxidhaltiges Plastifiziermittel und das Mischungsverhältnis von kohlenmonoxidgruppenhaltigem Plastifiziermittel zu nicht kohlenmonoxidhaltigem Plastifiziermittel im Gewichtsverhältnis 2 : 1 bis 1 : 2 steht und daß der Gehalt des polare Gruppen enthaltenden Plastifiziermittels oder polare Gruppen enthaltenden Plastifiziermittelgemisches in der Unterfolie oder Unterschicht und in der Oberfolie oder Oberschicht größer als 5

Gew.-% und kleiner als 50 Gew.-% (bezogen auf 100 Gew.-% Polymergemisch) ist und daß das polare Gruppen enthaltende Plastifiziermittelgemisch mit einem Molekulargewicht von über 100.000 zusätzlich mindestens einen aliphatischen und/oder aromatischen Carbonsäureester enthält und das Gewichtsverhältnis des kohlenmonoxidhaltigen und kohlenmonoxidfreien polare Gruppen enthaltenden Plastifiziermittelgemisches zu den aliphatischen und/oder aromatischen Carbonsäureestern 1 : 0,3 bis 1 : 1,5 beträgt, wobei die qualitative und/oder quantitative Zusammensetzung zwischen Unterfolie(n) oder Unterschicht(en) und Oberfolie(n) oder Oberschicht(en) unterschiedlich sind oder der Prozentgehalt an Vinylchloridhomo-, -co-, -ter- und/oder -pfropfpolymerisat in der bzw. den Unterfolie(n) oder Unterschicht(en) kleiner ist als der in der bzw. den Oberfolie(n) oder Oberschicht(en) und/oder daß der prozentuale Gehalt des polare Gruppen enthaltende Plastifiziermittels oder Plastifiziermittelgemisches in der bzw. den Unterfolie(n) oder Unterschicht(en) größer ist als der in der bzw. den Oberfolie(n) oder Oberschicht(en).

Gemäß einer bevorzugten Ausführungsform der Erfindung steht das Mischungsverhältnis von kohlenmonoxidgruppenhaltigen Plastifiziermittel zu nicht kohlenmonoxidgruppenhaltigen Plastifiziermittel im Gewichtsverhältnis von 1,5 : 1 bis 1 : 1,5 und das Gewichtsverhältnis des kohlenmonoxidhaltigen und kohlenmonoxidfreien polare Gruppen enthaltenden Plastifiziermittelgemisches zu den aliphatischen und/oder aromatischen Carbonsäureestern beträgt 1 : 0,5 bis 1 : 1,2.

Verwendet man die kohlenmonoxidfreien Plastifiziermittel allein oder in einem anderen Mischungsverhältnis als dem erfindungsgemäßen Mischungsverhältnis, so treten Verarbeitungsschwierigkeiten, z. B. ein Blocken auf, die auch durch den Zusatz von Polycarbonsäureester und dgl. noch nicht völlig zu beseitigen sind.

Verwendet man andererseits kohlenmonoxidhaltige Plastifiziermittel allein oder in einem anderen Mischungsverhältnis als dem erfindungsgemäßen, so tritt eine bessere Verarbeitbarkeit, jedoch eine geringere Beständigkeit bei Wärme- und Lichtalterung auf.

Nach einer bevorzugten Ausführungsform enthält das polare Gruppen enthaltende Plastifiziermittelgemisch mit einem Molekulargewicht von über 100 000 zusätzlich mindestens einen aliphatischen und/oder aromatischen Carbonsäureester, vorzugsweise Trimellitsäureester und/oder Adipinsäureester, und das Gewichtsverhältnis des kohlenmonoxidhaltigen und kohlenmonoxidfreie polare Gruppen enthaltenden Plastifiziermittelgemisches zu den aliphatischen und/oder aromatischen Carbonsäureestern beträgt 1 : 0,3 bis 1 : 1,5, vorzugsweise 1 : 0,5 bis 1 : 1,2. In den Kombinationen mit diesen Verbindungen wird die Wirkung des Plastifiziermittels noch verbessert, beispielsweise u. a. die Verarbeitbarkeit.

Gemäß einer besonders bevorzugten Ausführungsform ist das polare Gruppen enthaltende kohlenmonoxidfreie und das kohlenmonoxidhaltige Plastifiziermittel bis zu 60 Gew.-%, vorzugsweise bis zu 40 Gew.-% (bezogen auf 100 Gew.-Teile polare Gruppen enthalendes kohlenmonoxidfreies und kohlenmonoxidhaltiges Plastifiziermittel) durch Polycaprolacton ersetzt.

Nach einer anderen vorteilhaften Ausführungsform sind die polare Gruppen enthaltenden kohlenmonoxidfreien und/oder kohlenmonoxidhaltigen Plastifiziermittel bis zu 50 Gew.-%, vorzugsweise bis zu 25 Gew.-% durch mindestens einen flüssigen Weichmacher ersetzt.

Nach einer bevorzugten Ausführungsform für eine Verbundfolie besteht die Oberfolie oder Oberschicht aus (bezogen auf 100 Gew,-% Polymere) 20 - 85 Gew.-%, vorzugsweise 40 - 78 Gew.-% Vinylchloridhomo-, -co-, -ter-, und/oder -pfropfpolymerisat und/oder Legierungen auf der Basis von Polyvinylchlorid, 40 - 15 Gew.-%, vorzugsweise 35 - 21 Gew.-%, polare Gruppen enthaltendes Alken- oder Alkenyl ($C_2$ - $C_4$) -Alkyl ($C_1$ - $C_8$) -Acrylat-Kohlenmonoxid-Terpolymerisat, Alken- oder Alkenyl ($C_2$ - $C_4$) -Alkyl ($C_1$ - $C_8$) -Methacrylat-Kohlenmonoxid-Terpolymerisat, Alken- oder Alkenyl ($C_2$ - $C_4$) - Alkyl ($C_1$ - $C_8$) Acrylat-Copolymerisat, Alken- oder Alkenyl ($C_2$ - $C_4$) Alkyl ($C_1$ - $C_8$) -Methacrylat-Copolymerisat, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat- Copolymerisat, Ethylen-Hexylacrylat-Copolymerisat, das statistisch verteilte Acrylat- oder Methacrylatgruppen sowie gegebenenfalls (im Fall von Terpolymerisaten) statistisch verteilte Kohlenmonoxidgruppen und einen Alkyl-Acrylat-Gehalt von mehr als 12 Gew.-% aufweist (berechnet auf das jeweilige polare Gruppen enthaltende Plastifiziermittel mit 100 Gew.-Teilen) und/oder Ethylen-Vinylacetat-Kohlenmonoxid-Terpolymerisat und/oder Ethylen-Vinylacetat-Coplymerisat, die ggf. ganz oder teilweise, vorzugsweise bis zu 65 Gew.-% (bezogen auf 100 Gew.-Teile des in der Oberschicht oder Oberfolie enthaltende polare Gruppen aufweisenden Plastifiziermittels oder Plastifiziermittelgemisches), durch einen Weichmacher oder ein Weichmachergemisch und/oder durch einen aliphatischen oder aromatischen Carbonsäureester, Diester, Polyester oder Polycarbonsäureester, vorzugsweise Adipinsäureester, Trimmellithsäureester und/oder Polycaprolacton ersetzt sind und 40 - 0 Gew.-%, vorzugsweise 25 - 1 Gew.-%, Acrylnitril-Butadien-Styrol-Co- und/oder -pfropfpolymerisat (ABS), Pfropfpolymerisat und/oder Copolymerisat auf der Basis von Styrol, Acrylnitl und/oder Maleinsäureanhydrid und/oder Acrylnitril-Styrol-Acrylester (ASA) und/oder Styrol-Acrylnitril-Copolymerisat (SAN) und/oder Styrol-Maleinsäureanhydrid-Butadien oder enthält diese Mischung oder Legierung enthält.

Nach einer weiteren bevorzugten Ausführungsform für eine Verbundfolie besteht die Unterfolie oder Unterschicht (bezogen auf 100 Gew.-% Polymere) aus 15 - 45 Gew.-%, vorzugsweise 20 - 35 Gew.-%, Vinylchlorid-homo-, -co-, -ter-, und/oder pfropfpolymerisat und/oder Legierungen auf der Basis von Polyvinylchlorid, 17 - 45 Gew.-%, vorzugsweise 20 - 40 Gew.-%, Acrylnitril-Butadien-Styrol (ABS), wobei das Acrylnitril-Butadien-Styrol-Co- und/oder -pfropfpolymerisat (ABS) durch ein Pfropfpolymerisat und/oder Copolymerisat auf der Basis von Styrol, Acrylnitril und/oder Maleinsäureanhydrid, Vorzugsweise auf der Basis oder bestehend aus Acrylnitril-Styrol-Acrylester (ASA) und/oder Styrol-Acrylnitril-Copolymerisat (SAN) und/oder Styrol-Maleinsäureanhydrid-Butadien, zu mehr als 10 Gew.-%, vorzugsweise zu 40 - 100 Gew.-%, (bezogen auf das eingesetzte ABS) ersetzt ist, 38 - 10 Gew.-%, vorzugsweise 35 - 15 Gew.-%, polare Gruppen enthaltendes Plastifiziermittel, enthaltend oder bestehend aus mindestens einem Alken- oder Alkenyl $(C_2 - C_4)$ - Alkyl$(C_1 - C_8)$-Acrylat-Kohlenmonoxid-Terpolymerisat, Alken- oder Alkenyl $(C_2 - C_4)$ - Alkyl$(C_1 - C_8)$-Methacrylat-Kohlenmonoxid-Terpolymerisat, Alken- oder Alkenyl $(C_2 - C_4)$ - Alkyl$(C_1 - C_8)$-Acrylat-Copolymerisat, Alken- oder Alkenyl $(C_2 - C_4)$ - Alkyl$(C_1 - C_8)$-Methacrylat-Copolymerisat besteht oder dieses enthält, mit einem Alkyl-Acrylat-Gehalt oder Alkyl-Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat oder Alkylmethacrylatgruppen sowie gegebenenfalls (im Fall von Terpolymerisaten) statistisch verteilte Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat, 15 - 0 Gew.-%, vorzugsweise 12,5 - 5 Gew.-%, mindestens eines Copolymerisats des Styrols, Acrylates und/oder Methacrylates, vorzugsweise Styrol-Maleinsäureanhydrid-Copolymerisat (SMA), Methacryl-Acrylsäureester-Copolymerisat und/oder Styrol-Acrylnitril-Copolymerisat, und/oder 15 - 0 Gew.-%, vorzugsweise 12,5 - 5 Gew.-%, mindestens eines teilvernetzten und/oder elastomeren Modifizierungsmittels, vorzugsweise Acrylester-Copolymerisat und/oder Acrylnitril-Butadien-Copolymerisat oder enthält eines oder mehrere dieser Polymerisate enthält.

Nach einer weiteren Ausführungsform einer Verbundfolie besteht die Oberfolie oder Oberschicht (bezogen auf 100 Gew.-% Polymere) aus 15 - 80 Gew.-%, vorzugsweise 30 - 78 Gew.-%, Vinylchloridhomo-, -co-, -ter-, und/oder pfropfpolymerisat und/oder Legierungen auf der Basis von Polyvinylchlorid, 30 - 0 Gew.-%, vorzugsweise 27 - 1 Gew.-%, Pfropfpolymerisat und/oder Copolymerisat auf der Basis von Styrol, Acrylnitril und/oder Maleinsäureanhydrid, vorzugsweise auf der Basis oder bestehend aus Acrylnitril-Styrol-Acrylester (ASA) und/oder Styrol-Acrylnitril-Copolymerisat (SAN) und/oder Styrol-Maleinsäureanhydrid-Butadien, das gegebenenfalls geringe Gewichtsmengen (Gewichtsmengen bis zu 4 Gew.-%, vorzugsweise unter 2 Gew.-%) Acrylnitril-Butadien-Styrol-Co- und/oder -pfropfpolymerisat (ABS) enthalten kann, 40 - 20 Gew.-%, vorzugsweise 35 - 21 Gew.-%, polare Gruppen enthaltendes Plastifiziermittelgemisches, 10 - 0 Gew.-%, vorzugsweise 5 - 0,5 Gew.-%, mindestens eines Copolymerisats des Styrols, Acrylates und/oder Methacrylates, vorzugsweise Styrol-Maleinsäureanhydrid-Copolymerisat (SMA), Methacryl-Acrylsäureester-Copolymerisat und/oder Styrol-Acrylnitril-Copolymerisat und/oder 5 - 0 Gew.-%, vorzugsweise 3 - 0,5 Gew.-%, mindestens eines teilvernetzten und/oder elastomeren Modifizierungsmittels, vorzugsweise Acrylester-Copolymerisat und/oder Acrylnitril-Butadien-Copolymerisat oder enthält eines oder mehrere dieser Polymerisate.

Die Folie oder Folienschicht(en) enthalten bevorzugt, bezogen auf 100 Gew.-Teile der Polymermischung oder Polymerlegierung 2 - 20 Gew.-Teile, vorzugsweise 3 - 15 Gew.-Teile, eines oder mehrerer Verarbeitungshilfsmittel, vorzugsweise Gleitmittel, Stabilisatoren, Fließfähigkeitsverbesserungsmittel und/oder Antioxidantien, 0 - 50 Gew.-Teile, vorzugsweise 0,5 - 30 Gew.-Teile,eines Zusatzmittels oder Zusatzmittelgemisches, vorzugsweise mindestens eines Füllstoffes, mindestens eines Mittels zum Schwerentflammbarmachen, mindestens eines Farbstoffes oder Farbpigmentes, enthält, sowie 0 - 12 Gew.-Teile, vorzugsweise 0,1 - 10 Gew.-Teile, mindestens eines schwerflüchtigen, vorzugsweise migrationsbeständigen Weichmachers.

Nach einer weiteren Ausführungsform besteht die Folie aus mindestens einer Unterfolie oder Unterschicht und mindestens einer Oberfolie oder Oberschicht, wobei die qualitative und/oder quantitative Zusammensetzung zwischen Unterfolie(n) oder Unterschicht(en) und Oberfolie(n) oder Oberschicht(en) unterschiedlich sind oder der Prozentgehalt an Vinylchloridhomo-, -co-, -ter- und/oder -pfropfpolymerisat in der bzw. den Unterfolie(n) oder Unterschicht(en) ist kleiner als der in der bzw. den Oberfolie(n) oder Oberschicht(en) und/oder daß der prozentuale Gehalt des polare Gruppen enthaltende Plastifiziermittels oder Plastifiziermittelgemisches in der bzw. den Unterfolie(n) oder Unterschicht(en) ist größer als der in der bzw. den Oberfolie(n) oder Oberschicht(en).

Die Oberflächenfolie ist nach einer Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen auf ihrer freien Oberflächenschicht überzogen ist.

Die Erfindung bestrifft weiterhin ein Verfahren zur Herstellung der Folie, wobei die Kunststoffmischung der Monofolie, Ober- und/oder Unterfolie unter Einhaltung der vorgenannten Zusammensetzungen in einem Extruder oder anderen an sich bekannten Plastifiziervorrichtungen, vorzugsweise Einschnecken- oder Doppelschneckenextruder, Planetenwalzenextruder oder Plastifizierwerken, gegebenenfalls zusammen mit den Verarbeitungshilfsmitteln und/oder Zusatzmitteln erhitzt und plastifiziert wird und je nach Härteeinstellung zwischen 150 °C und 210 °C, vorzugsweise 160 °C bis 200 °C (Massentemperatur), zu Folien verarbeitet wird.

Die auf 150 - 210 °C, vorzugsweise 160 - 200 °C, heiße kunststoffhaltige Masse wird über einen Mehrwalzenkalander, vorzugsweise Drei- oder Vierwalzenkalander, zu einer Folienbahn verformt, wobei die Temperatureinstellung der ersten, zweiten und dritten Walze, vorzugsweise zwischen 170 und 200 °C, die der vierten Walze zwischen 160 und 180 °C liegt.

Nach einer weiteren Ausführungsform werden die Einzelbahnen auf einem sog. Prägekalander hitzekaschiert und/oder bei mehrschichtigen Folien oder Verbundfolien die Oberfolie oder Oberschicht mit einer Oberflächenschicht oder Lackschicht im vorab versehen und nachfolgend auf die Unterfolie oder den Verbund oder auf den fertigen Verbund nach dem sog. Prägen aufgebracht.

Beispiele

1. Beispiel für Unterfolie

|  | Bsp. a) Gew-Tl Gew-% | Bsp. b) Gew-Tl Gew-% | Bsp. c) Gew-Tl Gew-% |
|---|---|---|---|
| Suspensions-Polyvinylchlorid (PVC) | 25,8 | 25,8 | 25,8 |
| Acrylnitril-Butadien-Styrol-Copolymerisat (ABS) | 25,8 | 25,8 | 25,8 |
| Styrol-Acrylnitril-Copolymerisat (SAN) | 12,9 | 12,9 | 12,9 |
| Acrylnitril-Butadienharz (NBR) | 6,5 | 6,5 | 6,5 |
| Ethylen-Butylacrylat-Kohlenmonoxid-Terpolymerisat | 12,9 |  |  |
| Ethylen-Vinylacetat-Copolymer (EVA) | 12,9 | 12,9 | 9,7 |
| Ethylen-Vinylacetat-Kohlenmonoxid-Terpolymerisat (EVA/Co) |  | 12,9 | 9,7 |
| Trimellitsäureester | 3,2 | 3,2 | 9,7 |

2. Beispiel für Oberfolie

|  | Bsp. a) Gew-Tl Gew-% | Bsp. b) Gew-Tl Gew-% | Bsp. c) Gew-Tl Gew-% |
|---|---|---|---|
| Suspensions-Polyvinylchlorid (PVC) | 55,2 | 55,2 | 51,6 |
| Acrylnitril-Styrol-Acrylsäureester-Pfropfpolymerisat (ASA) | 13,8 | 13,8 | 12,9 |
| Ethylen-Butylacrylat-Kohlenmonoxid-Terpolymer | 13,8 |  |  |
| Ethylen-Vinylacetat-Copolymer (EVA) | 13,8 | 13,8 | 12,9 |
| Ethylen-Vinylacetat-Copolymer Terpolymerisat (EVA/Co) |  | 13,8 | 12,9 |
| Trimellitsäureester + Additive | 3,4 | 3,4 | 9,7 |

3. Beispiel für Monofolie

|  | a) Gew-% |
|---|---|
| Suspensions-Polyvinylchlorid (PVC) | 34,5 |
| Styrolacrylnitrilcopolymerisat (SAN) | 34,5 |
| Ethylen-Vinylacetat-Kohlenmonoxid-Terpolmerisat (EVA/Co) | 6,9 |
| Ethylen-Vinylacetat-Kohlenmonoxid-Terpolymerisat (EVA/Co) | 10,3 |
| Ethylen-Vinylacetat-Copolymerisat (EVA) | 10,3 |
| Trimellitsäureester + Additive | 3,5 |

4. Beispiel für Monofolie

|  | Gew-% |
|---|---|
| Suspensions-Polyvinylchlorid (PVC) | 32,3 |
| Acrylnitril-Styrol-Acrylsäureester-Pfropfpolymerisat (ASA) | 25,8 |
| Styrol-acrylnitril-copolymerisat (SAN) | 12,9 |
| Ethylen-Vinylacetat-Kohlenmonoxid-Terpolymerisat (EVA/Co) | 9,6 |
| Ethylen-Vinylacetat-Copolymerisat (EVA) | 9,7 |
| Trimellitsäureester (EVA) | 9,7 |

Als Additive wurden bei den Beispielen folgende Verarbeitungshilfsmittel und Zusatzmittel in Höhe von 7 Gew. % eingesetzt:
Octyl-S-Sn-Stabilisator
Antioxidans
Verarbeitungshilfsmittel
Gleitmittel
Flammschutzmittel
Coantioxidans
Pigmente

Beispiel 2 ist ohne Flammschutzmittel

1. Ergebnis zu Beispiel 1 - Unterfolie

|  |  |  | Bsp. a) | Bsp. b) | Bsp. c) |
|---|---|---|---|---|---|
| Dicke Taster |  | mm | 0,44-0,48 | 0,41-0,46 | 0,42-0,49 |
| Shore D |  |  | 53 | 55 | 52 |
| Zugfestigkeit | l | N/mm² | x17,7 s0,5 | x17,9 s0,3 | x17,6 s0,2 |
| DIN 52910 | q | N/mm² | x16,7 s0,5 | x16,1 s0,5 | x15,9 s0,3 |
| Bruchdehnung |  |  |  |  |  |
| DIN 52910 $l_o$ 40 mm |  |  |  |  |  |
| Original | l | % n5 | x176 s17 | x180 s6 | x210 s3 |
|  | q |  | x212 s 9 | x185 s9 | x205 s6 |

2. Ergebnis zu Beispiel 2 - Oberfolie

|  |  |  | Bsp. a) | Bsp. b) | Bsp. c) |
|---|---|---|---|---|---|
| Dicke Taster |  | mm | 0,48-0,53 | 0,39-0,43 | 0,40-0,45 |
| Shore D |  |  | 56 | 58 | 42 |
| Zugfestigkeit | l | N/mm² | x24,4 s1,5 | x26,0 s2,0 | x19,2 s0,6 |
| DIN 52910 | q |  | x23,9 s0,6 | x26,4 s0,3 | x17,5 s0,5 |
| Bruchdehnung |  |  |  |  |  |
| DIN 52910 $L_o$ 40 mm |  |  |  |  |  |
| Original | l | % 5% | x250 s14 | x234 s19 | x228 s 6 |
|  | q |  | x255 s 8 | x245 s 2 | x217 s10 |
| n.Heißbelichtung | l | % n4 | x133 s11 | x 82 s23 | x134 s14 |

(XENO 1200) 5 Tage
Folie hinterschäumt
mit BA 486

Eingesetztes ASA hat vorzugsweise die Zusammensetzung:

| Elastomertyp: | Butylacrylat |
|---|---|
| Gehalt an Elastomer: | 40 % bis 55 % |
| Propfcopolymer: | SAN (60-45 %) |

Für andere Beispiele wurde ein Produkt folgender Zusammensetzung verwendet:

| Elastomertyp: | Butylacrylat |
|---|---|
| Gehalt an Elastomer: | 60 bis 90 % |
| Pfropfcopolymer: | SAN oder auch PMMA |

**Patentansprüche**

1. Tiefziehfähige Verbundfolie für Kraftfahrzeuginnenräume mit einer Foliendicke von 500 bis 1800 $\mu$m, bestehend aus mindestens einer Unterfolie oder Unterschicht und mindestens einer Oberfolie oder Oberschicht, wobei mindestens eine Unterfolie oder Unterschicht bzw. mindestens eine Oberfolie oder Oberschicht aus Mischungen von Vinylchloridhomo-, -co-, -ter- und/oder -pfropfpolymerisat, Styrol-Co- oder -pfropfpolymerisat besteht sowie einem Plastifiziermittelgemisch auf der Basis eines plastifizierenden Hochpolymeren mit polaren Gruppen, die mit Polyvinylchlorid eine Phase bildet, gegebenenfalls mit einer an der Verbundfolie angeordneten Schaumschicht oder Hinterschäumung, wobei mindestens eine weitere Oberfolie oder Oberflächenschicht bzw. eine weitere Unterfolie oder Unterschicht auf der Basis eines Polymeren oder Polymergemisches besteht sowie einem Plastifiziermittelgemisch auf der Basis plastifizierenden Hochpolymeren mit polaren Gruppen, die mit Polyvinylchlorid eine Phase bildet, wobei das polare Gruppen aufweisende Plastifiziermittelgemisch der Unter- und Oberfolie ein Molekulargewicht größer als 100.000 aufweist und mindestens einem Alken- oder Alkenyl ($C_2$ - $C_4$) - Alkyl ($C_1$ - $C_8$)-Acrylat-Kohlenmonoxid-Terpolymerisat, Alken- oder Alkenyl ($C_2$ - $C_4$) - Alkyl ($C_1$ - $C_8$)-Methacry- lat-Kohlenmonoxid-Terpolymerisat, Alken- oder Alkenyl ($C_2$ - $C_4$) - Alkyl ($C_1$ - $C_8$)-Acrylat-Copolymeri- sat; Alken- oder Alkenyl ($C_2$ - $C_4$) - Alkyl ($C_1$ - $C_8$)-Methacrylat-Copolymerisat besteht, mit einem Alkyl- Acrylat-Gehalt oder Alkyl-Methacrylat-Gehalt von mehr als 12 Gew.-% (berechnet auf das jeweilige polare Gruppe enthaltende Plastifiziermittel mit 100 Gew.-Teilen) und mit statistisch verteilten Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen, dadurch gekennzeichnet, daß von den mindestens zwei in der jeweiligen Oberfolie oder Oberschicht und Unterfolie oder Unterschicht enthaltenden hochmolekularen und polare Gruppen enthaltenden Plastifiziermitteln eines ein kohlenmonoxidgruppenhaltiges Plastifiziermittel ist und das andere ein nicht kohlenmonoxidhaltiges Plastifiziermittel und das Mischungsverhältnis von kohlenmonoxidgruppenhaltigem Plastifiziermittel zu nicht kohlenmonoxidhaltigem Plastifiziermittel im Gewichtsverhältnis 2 : 1 bis 1 : 2 steht und daß der Gehalt des polare Gruppen enthaltenden Plastifiziermittels oder polare Gruppen enthaltenden Plastifiziermittelgemisches in der Unterfolie oder Unterschicht und in der Oberfolie oder Oberschicht größer als 5 Gew.-% und kleiner als 50 Gew.-% (bezogen auf 100 Gew.-% Polymergemisch) ist und daß das polare Gruppen enthaltende Plastifiziermittelgemisch mit einem Molekulargewicht von über 100.000 zusätzlich mindestens einen aliphatischen und/oder aromatischen Carbonsäureester enthält und das Gewichtsverhältnis des kohlenmonoxidhaltigen und kohlenmonoxidfreien polare Gruppen enthaltenden Plastifiziermittelgemisches zu den aliphatischen und/oder aromatischen Carbonsäureestern 1 : 0,3 bis 1 : 1,5 beträgt, wobei die qualitative und/oder quantitative Zusammensetzung zwischen Unterfolie(n) oder Unterschicht(en) und Oberfolie(n) oder Oberschicht(en) unterschiedlich sind oder der Prozentgehalt an Vinylchloridhomo-, -co-, -ter- und/oder -pfropfpolymerisat in der bzw. den Unterfolie(n) oder Unterschicht(en) kleiner ist als der in der bzw. den Oberfolie(n) oder Oberschicht(en) und/oder daß der prozentuale Gehalt des polare Gruppen enthaltende Plastifiziermittels oder Plastifiziermittelgemisches in der bzw. den Unterfolie(n) oder Unterschicht(en) größer ist als der in der bzw. den Oberfolie(n) oder Oberschicht(en).

2. Folie nach Anspruch 1, dadurch gekennzeichnet, daß das Mischungsverhältnis von kohlenmonoxidgruppenhaltigen Plastifiziermittel zu nichtkohlenmonoxidgruppenhaltigen Plastifiziermittel im Gewichtsverhältnis von 1,5 : 1 bis 1 : 1,5 steht und das Gewichtsverhältnis des kohlenmonoxidhaltigen und kohlenmonoxidfreien polare Gruppen enthaltenden Plastifiziermittelgemisches zu den aliphatischen und/oder aromatischen Carbonsäureestern
1 : 0,5 bis 1 : 1,2
beträgt.

3. Folie nach Ansprüchen 1 bis 2, dadurch gekennzeichnet, daß die Oberfolie oder Oberschicht aus (bezogen auf 100 Gew.-% Polymere)
20 - 85 Gew.-%
Vinylchloridhomo-, -co-, -ter- und/oder -pfropfpolymerisat und/oder Legierungen auf der Basis von Polyvinylchlorid,
40 - 15 Gew.-%
polare Gruppen enthaltendes Alken- oder Alkenyl ($C_2$ - $C_4$) - Alkyl ($C_1$ - $C_8$) -Acrylat-Kohlenmonoxid-Terpolymerisat, Alken- oder Alkenyl ($C_2$ - $C_4$) Alkyl ($C_1$ - $C_8$)-Methacrylat-Kohlenmonoxid-Terpolymerisat, Alken- oder Alkenyl ($C_2$ - $C_4$) - Alkyl ($C_1$ - $C_8$) Acrylat-Copolymerisat, Alken- oder Alkenyl ($C_2$ - $C_4$) Alkyl $C_1$ - $C_8$)-Methacrylat-Copolymerisat, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat, das statistisch verteilte Acrylat- oder Methacrylatgruppen sowie gegebenenfalls (im Fall von Terpolymerisaten) statistisch verteilte Kohlenmonoxidgruppen und einen Alkyl-Acrylat-Gehalt von mehr als 12 Gew.-% aufweist (berechnet auf das jeweilige polare Gruppen enthaltende Plastifiziermittel mit 100 Gew. -Teilen) und/oder Ethylen-Vinylacetat-Kohlenmonoxid-Terpolymerisat und/oder Ethylen-Vinylacetat-Copolymerisat, die gegebenenfalls teilweise durch einen Weichmacher oder ein Weichmachergemisch und/oder durch einen aliphatischen oder aromatischen Carbonsäureester, Diester, Polyester oder Polycarbonsäureester, Adipinsäureester, Trimellithsäureester und/oder Polycaprolacton ersetzt sind und
40 - 0 Gew.-%
Acrylnitril-Butadien-Styrol-Co- und/oder -pfropfpolymerisat (ABS), Pfropfpolymerisat und/oder Copolymerisat auf der Basis von Styrol, Acrylnitril und/oder Maleinsäureanhydrid und/oder Acrylnitril-Styrol-Acrylester (ASA) und/oder Styrol-Acrylnitril-Copolymerisat (SAN) und/oder Styrol-Maleinsäureanhydrid-Butadien oder diese Mischung oder Legierung enthält.

4. Folie nach Ansprüchen 1 bis 3, dadurch gekennzeichnet, daß die aus mindestens einer Unterfolie oder Unterschicht und mindestens einer Oberfolie oder Oberschicht bestehende Verbundfolie mindestens eine Unterfolie oder Unterschicht enthält, die (bezogen auf 100 Gew.-% Polymere) aus
15 - 45 Gew.-%
Vinylchloridhomo-, -co-, -ter- und/oder pfropfpolymerisat und/oder Legierungen auf der Basis von Polyvinylchlorid,
17 - 45 Gew.-%
Acrylnitril-Butadien-Styrol (ABS), wobei das Acrylnitril-Butadien-Styrol-Co- und/oder -pfropfpolymerisat (ABS) durch Pfropfpolymerisat und/oder Copolymerisat auf der Basis von Styrol, Acrylnitril und/oder Maleinsäureanhydrid
zu mehr als 10 Gew.-%
(bezogen auf das eingesetzte ABS), ersetzt ist,
38 - 10 Gew.-%
polare Gruppen enthaltendes Plastifiziermittel, enthaltend oder bestehend aus mindestens einem Alken- oder Alkenyl ($C_2$ - $C_4$) - Alkyl ($C_1$ - $C_8$)-Acrylat-Kohlenmonoxid-Terpolymerisat, Alken- oder Alkenyl ($C_2$ - $C_4$) - Alkyl ($C_1$ - $C_8$)-Methacrylat-Kohlenmonoxid-Terpolymerisat, Alken- oder Alkenyl ($C_2$ - $C_4$) - Alkyl ($C_1$ - $C_8$)-Acrylat-Copolymerisat, Alken- oder Alkenyl ($C_2$ - $C_4$) - Alkyl ($C_1$ - $C_8$)-Methacrylat-Copolymerisat besteht oder dieses enthält, mit einem Alkyl-Acrylat-Gehalt oder Alkyl-Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat,

15 - 0 Gew.-%

mindestens eines Copolymerisats des Styrols, Acrylates und/oder Methacrylates

15 - 0 Gew.-%

mindestens eines teilvernetzten und/oder elastomeren Modifizierungsmittels enthält.

5. Folie nach Ansprüchen 1 bis 4, dadurch gekennzeichnet, daß die aus mindestens einer Unterfolie oder Unterschicht und mindestens einer Oberfolie oder Oberschicht bestehende Verbundfolie mindestens eine Unterfolie oder Unterschicht enthält, die (bezogen auf 100 Gew.-% Polymere) aus

20 - 35 Gew.-%

Vinylchloridhomo-, -co-, -ter- und/oder pfropfpolymerisat und/oder Legierungen auf der Basis von Polyvinylchlorid,

20 - 40 Gew.-%

Acrylnitril-Butadien-Styrol (ABS), wobei das Acrylnitril-Butadien-Styrol-Co- und/oder -pfropfpolymerisat (ABS) durch Pfropfpolymerisat und/oder Copolymerisat bestehend aus Acrylnitril-Styrol-Acrylester (ASA) und/oder Styrol-Acrylnitril-Copolymerisat (SAN) und/oder Styrol-Maleinsäureanhydrid-Butadien

zu 40 bis 100 Gew.-%

(bezogen auf das eingesetzte ABS), ersetzt ist,

35 - 15 Gew.-%

polare Gruppen enthaltendes Plastifiziermittel, enthaltend oder bestehend aus mindestens einem Alken- oder Alkenyl ($C_2$ - $C_4$) - Alkyl ($C_1$ - $C_8$)-Acrylat-Kohlenmonoxid-Terpolymerisat, Alken- oder Alkenyl ($C_2$ - $C_4$) - Alkyl ($C_1$ - $C_8$)-Methacrylat-Kohlenmonoxid-Terpolymerisat, Alken- oder Alkenyl ($C_2$ - $C_4$) - Alkyl ($C_1$ - $C_8$)-Acrylat-Copolymerisat, Alken- oder Alkenyl ($C_2$ - $C_4$) - Alkyl ($C_1$ - $C_8$)-Methacrylat-Copolymerisat besteht oder dieses enthält, mit einem Alkyl-Acrylat-Gehalt oder Alkyl-Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat

12,5 - 5 Gew.-%

Styrol-Maleinsäureanhydrid-Copolymerisat (SMA), Methacryl-Acrylsäureester-Copolymerisat und/oder Styrol-Acrylnitril-Copolymerisat, und/oder

12,5 - 5 Gew.-%

Acrylester-Copolymerisat und/oder Acrylnitril-Butadien-Copolymerisat besteht.

6. Folie nach Ansprüchen 1 bis 5, dadurch gekennzeichnet, daß die Verbundfolie mindestens eine Oberfolie oder Oberschicht enthält, die (bezogen auf 100 Gew.-% Polymere) aus

15 - 80 Gew.-%

Vinylchloridhomo-, -co-, -ter- und/oder pfropfpolymerisat und/oder Legierungen auf der Basis von Polyvinylchlorid,

30 - 0 Gew.-%

Pfropfpolymerisat und/oder Copolymerisat auf der Basis von Styrol, Acrylnitril und/oder Maleinsäureanhydrid, vorzugsweise auf der Basis oder bestehend aus Acrylnitril-Styrol-Acrylester (ASA) und/oder Styrol-Acrylnitril-Copolymerisat (SAN) und/oder Styrol-Maleinsäureanhydrid-Butadien, das gegebenenfalls geringe Gewichtsmengen (Gewichtsmengen bis zu 4 Gew.-%) Acrylnitril-Butadien-Styrol-Co- und/oder -Pfropfpolymerisat (ABS) enthalten kann,

40 - 20 Gew.-%

polare Gruppen enthaltendes Plastifiziermittelgemisches,

10 - 0 Gew.-%

mindestens eines Copolymerisats des Styrols, Acrylates und/oder Methacrylates und/oder

5 - 0 Gew.-%

mindestens eines teilvernetzten und/oder elastomeren Modifizierungsmittels enthält.

7. Folie nach Ansprüchen 1 bis 6, dadurch gekennzeichnet, daß die Folie oder Folienschicht(en), bezogen auf 100 Gew.-Teile der Polymermischung oder Polymerlegierung

2 - 20 Gew.-Teile

EP 0 377 148 B1

eines oder mehrerer Gleitmittel, Stabilisatoren, und/oder Antioxidantien,

0 - 50 Gew.-Teile

mindestens eines Füllstoffes, mindestens eines Mittels zum Schwerentflammbarmachen, mindestens eines Farbstoffes oder Farbpigmentes, enthält, sowie

0 - 12 Gew.-Teile

mindestens eines schwerflüchtigen, vorzugsweise migrationsbeständigen Weichmachers enthält.

8. Folie nach Ansprüchen 1 bis 7, dadurch gekennzeichnet, daß der prozentuale Gehalt des polare Gruppen enthaltende Plastifiziermittels oder Plastifiziermittelgemisches in der bzw. den Unterfolie(n) oder Unterschicht(en) größer ist als der in der bzw. den Oberfolie(n) oder Oberschicht(en).

9. Folie nach Ansprüchen 1 bis 8, dadurch gekennzeichnet, daß die Oberflächenfolie mit einer Lackschicht oder Kunststoffbeschichtung auf der Basis von Acrylatharzen, Polyvinylchlorid-Acrylatharzen, Polyurethanharzen und/oder Epoxidharzen auf ihrer freien Oberflächenschicht überzogen ist.

10. Verfahren zur Herstellung einer Folie, wobei die Kunststoffmischung der Ober- und/oder Unterfolie in einem Extruder oder anderen an sich bekannten Plastifiziervorrichtungen erhitzt und plastifiziert wird unter Einhaltung der Folienzusammensetzung nach Ansprüchen 1 bis 9, dadurch gekennzeichnet, daß die Kunststoffmasse bei

150 und 210 °C

(Massentemperatur) zu Folien verarbeitet wird und/oder, daß die

150 - 210 °C, vorzugsweise

160 - 200 °C,

heiße kunststoffhaltige Masse über einen Mehrwalzenkalander, vorzugsweise Drei- oder Vierwalzenkalander, zu einer Folienbahn verformt wird, wobei die Temperatureinstellung der ersten, zweiten und dritten Walze vorzugsweise zwischen 170 und 200 °C, die der vierten Walze zwischen 160 und 180 °C liegt.

11. Verfahren nach Anspruch 10, dadurch gekennzeichnet, daß die Einzelbahnen auf einem sogenannten Prägekalander hitzekaschiert werden und/oder bei mehrschichtigen Folien oder Verbundfolien die Oberfolie oder Oberschicht mit einer Oberflächenschicht oder Lackschicht im vorab versehen und nachfolgend auf die Unterfolie oder den Verbund oder auf den fertigen Verbund nach dem sogenannten Prägen aufgebracht wird.

## Claims

1. A negatively thermoformable composite sheet for motor vehicle interiors with a sheet thickness of

500 to 1800 $\mu$m,

consisting of at least one lower sheet or lower layer and at least one upper sheet or upper layer, wherein at least one lower sheet or lower layer or at least one upper sheet or upper layer consists of mixtures of vinyl chloride homo-, co-, ter- and/or graft polymer, styrene co- or graft polymer, and of a plasticising agent mixture based on a plasticising high polymer containing polar groups which forms one phase with polyvinyl chloride, optionally with a foamed layer or foamed backing layer disposed on the composite sheet, wherein at least one additional upper sheet or surface layer or one additional lower sheet or lower layer exists based on a polymer or polymer mixture and with a plasticising agent mixture based on plasticising high polymers containing polar groups which forms one phase with polyvinyl chloride, wherein the plasticising agent mixture containing polar groups of the lower and upper sheet has a molecular weight higher than 100,000 and consists of at least one ($C_2$ - $C_4$) alkene or alkenyl - ($C_1$ - $C_8$) alkyl acrylate - carbon monoxide terpolymer, ($C_2$ - $C_4$) alkene or alkenyl - ($C_1$ - $C_8$) alkyl methacrylate - carbon monoxide terpolymer, ($C_2$ - $C_4$) alkene or alkenyl - ($C_1$ - $C_8$) alkyl acrylate copolymer or ($C_2$ - $C_4$) alkene or alkenyl - ($C_1$ - $C_8$) alkyl methacrylate copolymer with an alkyl acrylate content or alkyl methacrylate content greater than 12 weight % (based on 100 parts by weight of the respective plasticising agent containing polar groups) and with randomly distributed acrylate or methacrylate groups, or alkyl acrylate or alkyl methacrylate groups, and optionally (in the case of terpolymers) with randomly distributed carbon monoxide groups, characterised in that of the at least two, high molecular weight, polar group-containing plasticising agents which are contained in the respective upper sheet or upper layer and lower sheet or lower layer, one is a plasticising agent which contains carbon monoxide groups and the other is a plasticising agent which does not contain carbon

11

EP 0 377 148 B1

monoxide groups, and the mixture ratio of plasticising agent containing carbon monoxide groups to plasticising agent not containing carbon monoxide groups is in a weight ratio of

2 : 1 to 1 : 2,

and that the content of plasticising agent containing polar groups or plasticising agent mixture containing polar groups in the lower sheet or lower layer and in the upper sheet or upper layer is greater than 5 weight % and less than 50 weight % (based on 100 weight % of polymer mixture), and that the plasticising agent mixture containing polar groups and having a molecular weight higher than 100,000 additionally contains at least one aliphatic and/or aromatic carboxylic acid ester, and the weight ratio of the carbon monoxide-containing and carbon monoxide-free plasticising agent mixture containing polar groups to the aliphatic and/or aromatic carboxylic acid esters is

1 : 0.3 to 1 : 1.5,

wherein the qualitative and/or quantitative compositions are different between the lower sheet(s) or lower layer(s) and upper sheet(s) or upper layer(s), or the percentage content of vinyl chloride homo-, co-, ter- or graft polymer in the lower sheet(s) or lower layer(s) is less than that in the upper sheet(s) or upper layer(s), and/or that the percentage content of plasticising agent or plasticising agent mixture containing polar groups in the lower sheet(s) or lower layer(s) is greater than that in the upper sheet(s) or upper layer(s).

2. A sheet according to claim 1, characterised in that the mixture ratio of plasticising agent containing carbon monoxide groups to plasticising agent not containing carbon monoxide groups is in a weight ratio of 1.5 : 1 to 1 : 1.5, and the weight ratio of the carbon monoxide-containing and carbon monoxide-free plasticising agent mixture containing polar groups to the aliphatic and/or aromatic carboxylic esters is

1 : 0.5 to 1 : 1.2.

3. A sheet according to claims 1 and 2, characterised in that the upper sheet or upper layer consists (based on 100 weight % of polymer) of

20 - 85 weight %

of vinyl chloride homo-,co-, ter- and/or graft polymer and/or alloys based on polyvinyl chloride,

40 - 15 weight % of

a polar group-containing ($C_2$ - $C_4$) alkene or alkenyl - ($C_1$ - $C_8$) alkyl acrylate - carbon monoxide terpolymer, ($C_2$ - $C_4$) alkene or alkenyl - ($C_1$ - $C_8$) alkyl methacrylate - carbon monoxide terpolymer, ($C_2$ - $C_4$) alkene or alkenyl - ($C_1$ - $C_8$) alkyl acrylate copolymer or ($C_2$ - $C_4$) alkene or alkenyl - ($C_1$ - $C_8$) alkyl methacrylate copolymer, preferably an ethylene-butyl acrylate-carbon monoxide terpolymer, ethylene-hexyl acrylate-carbon monoxide terpolymer, ethylene-butyl acrylate copolymer or ethylene-hexyl acrylate copolymer which contains randomly distributed acrylate or methacrylate groups and optionally (in the case of terpolymers) randomly distributed carbon monoxide groups and has an alkyl acrylate content greater than 12 weight % (based on 100 parts by weight of the respective polar group-containing plasticising agent) and/or an ethylene-vinyl acetate-carbon monoxide terpolymer and/or ethylene-vinyl acetate copolymer, which are optionally partially replaced by a softener or softener mixture and/or by an aliphatic or aromatic carboxylic acid ester, diester, polyester or polycarboxylic acid ester, adipic acid ester, trimellitic acid ester and/or polycaprolactone, and contains

40 - 0 weight %

of an acrylonitrile-butadiene-styrene co- and/or graft polymer (ABS), a graft polymer and/or copolymer based on styrene, acrylonitrile and/or maleic anhydride and/or acrylonitrile-styrene-acrylic ester (ASA) and/or styrene-acrylonitrile copolymer (SAN) and/or styrene-maleic anhydride-butadiene or this mixture or alloy.

4. A sheet according to claims 1 to 3, characterised in that the composite sheet consisting of at least one lower sheet or lower layer and at least one upper sheet or upper layer contains at least one lower sheet or lower layer which (based on 100 weight % polymer) consists of or contains

15 - 45 weight %

of vinyl chloride homo-, co-, ter- and/or graft polymer and/or alloys based on polyvinyl chloride,

17 - 45 weight %

of acrylonitrile-butadiene-styrene (ABS), wherein

more than 10 weight %

(based on the ABS used) of the acrylonitrile-butadiene-styrene co- and/or graft polymer (ABS) is replaced by a graft polymer and/or copolymer based on styrene, acrylonitrile and/or maleic anhydride,

12

38 - 10 weight %

of a polar group-containing plasticising agent, containing or consisting of at least one ($C_2$ - $C_4$) alkene or alkenyl - ($C_1$ - $C_8$) alkyl acrylate - carbon monoxide terpolymer, ($C_2$ - $C_4$) alkene or alkenyl - ($C_1$ - $C_8$) alkyl methacrylate - carbon monoxide terpolymer, ($C_2$ - $C_4$) alkene or alkenyl - ($C_1$ - $C_8$) alkyl acrylate copolymer or ($C_2$ -$C_4$) alkene or alkenyl - ($C_1$ - $C_8$) alkyl methacrylate copolymer having an alkyl acrylate content or alkyl methacrylate content greater than 12 weight % (based on 100 parts by weight of the respective, polar group-containing plasticising agent) and having randomly distributed acrylate or methacrylate groups and optionally (in the case of terpolymers) randomly distributed carbon monoxide groups, preferably an ethylene-butyl acrylate-carbon monoxide terpolymer, an ethylene-hexyl acrylate-carbon monoxide terpolymer, an ethylene-butyl acrylate copolymer or an ethylene-hexyl acrylate copolymer,

15 - 0 weight %

of at least one copolymer of styrene, acrylate and/or methacrylate, and

15 - 0 weight %

of at least one partially crosslinked and/or elastomeric modifier.

5. A sheet according to claims 1 to 4, characterised in that the composite sheet consisting of at least one lower sheet or lower layer and at least one upper sheet or upper layer contains at least one lower sheet or lower layer which (based on 100 weight % polymer) consists of or contains

20 - 35 weight %

of a vinyl chloride homo-, co-, ter- and/or graft polymer and/or alloys based on polyvinyl chloride,

20 - 40 weight %

of acrylonitrile-butadiene-styrene (ABS), wherein

40 to 100 weight %

(based on the ABS used) of the acrylonitrile-butadiene-styrene co- and/or graft polymer (ABS) is replaced by a graft polymer and/or copolymer consisting of acrylonitrile-styrene-acrylic ester (ASA) and/or styrene-acrylonitrile copolymer (SAN) and/or styrene-maleic anhydride-butadiene,

35 - 15 weight %

of a polar group-containing plasticising agent, containing or consisting of at least one ($C_2$ - $C_4$) alkene or alkenyl - ($C_1$ - $C_8$) alkyl acrylate - carbon monoxide terpolymer, ($C_2$ - $C_4$) alkene or alkenyl - ($C_1$ - $C_8$) alkyl methacrylate - carbon monoxide terpolymer, ($C_2$ - $C_4$) alkene or alkenyl - ($C_1$ - $C_8$) alkyl acrylate copolymer or ($C_2$ -$C_4$) alkene or alkenyl - ($C_1$ - $C_8$) alkyl methacrylate copolymer having an alkyl acrylate content or alkyl methacrylate content greater than 12 weight % (based on 100 parts by weight of the respective, polar group-containing plasticising agent) and having randomly distributed acrylate or methacrylate groups or alkyl acrylate or alkyl methacrylate groups and optionally (in the case of terpolymers) randomly distributed carbon monoxide groups, preferably an ethylene-butyl acrylate-carbon monoxide terpolymer, an ethylene-hexyl acrylate-carbon monoxide terpolymer, an ethylene-butyl acrylate copolymer or an ethylene-hexyl acrylate copolymer,

12.5 - 5 weight %

of a styrene-maleic anhydride copolymer (SMA), a methacrylic-acrylic acid ester copolymer and/or a styrene-acrylonitrile copolymer, and/or

12.5 - 5 weight %

of an acrylic ester copolymer and/or acrylonitrile-butadiene copolymer.

6. A sheet according to claims 1 to 5, characterised in that the composite sheet contains at least one upper sheet or upper layer, which (based on 100 weight % polymer) consists of     15 - 80 weight %

of vinyl chloride homo-, co-, ter- and/or graft polymer and/or alloys based on polyvinyl chloride,

30 - 0 weight %

of a graft polymer and/or copolymer based on styrene, acrylonitrile and/or maleic anhydride, preferably based on or consisting of acrylonitrile-styrene-acrylic ester (ASA) and/or styrene-acrylonitrile copolymer (SAN) and/or styrene-maleic anhydride-butadiene, which may optionally contain small amounts by weight (amounts by weight of up to 4 weight %, preferably less than 2 weight %) of acrylonitrile-butadiene-styrene co- and/or graft polymer (ABS),

40 - 20 weight %

of a polar group-containing plasticising agent mixture,

10 - 0 weight %

of at least one copolymer of styrene, acrylate and/or methacrylate, and/or

5 - 0 weight %

of at least one partially crosslinked and/or elastomeric modifier.

7. A sheet according to claims 1 to 6, characterised in that the sheet or sheet layer(s) contains, based on 100 parts by weight of the polymer mixture or polymer alloy,

   2 - 20 parts by weight

of one or more internal lubricants, stabilisers and/or antioxidants,

   0 - 50 parts by weight

of at least one filler, at least one agent for conferring flame-retardancy, at least one colorant or coloured pigment, as well as

   0 - 12 parts by weight

of at least one difficultly volatile softener which is preferably resistant to migration.

8. A sheet according to one or more of claims 1 to 7, characterised in that the percentage content of the polar group-containing plasticising agent or plasticising agent mixture in the lower sheet(s) or lower layer(s) is greater than that in the upper sheet(s) or upper layer(s).

9. A sheet according to claims 1 to 8, characterised in that the surface sheet is coated on its free surface layer with a lacquer layer or plastic coating based on acrylate resins, polyvinyl chloride-acrylate resins, polyurethane resins and/or epoxy resins.

10. A process for producing a sheet, wherein the plastic mixture of the upper and/or lower sheet is heated and plasticised in an extruder or in other plasticising devices known in the art, with the sheet composition according to claims 1 to 9 being adhered to, characterised in that the plastic compound is processed between

   150°C and 210°C

(compound temperature) to form sheets, and/or that the plastic-containing compound, which is at a temperature of

   150°C - 210°C, preferably

   160°C - 200°C

is shaped via a multi-roll calender, preferably a three- or four-roll calender to form a length of sheet, wherein the temperature setting of the first, second and third rolls is preferably between 170 and 200°C, and that of the fourth roll is between 160 and 180°C.

11. A process according to claim 10, characterised in that the individual lengths are hot-laminated on a so-called stamping calender and/or for multilayer sheets or composite sheets the upper sheet or upper layer is first provided with a surface layer or lacquer layer and is subsequently applied to the lower sheet or to the composite or to the prefabricated composite after the so-called stamping.

**Revendications**

1. Feuille composite adaptée à l'emboutissage pour les intérieurs de véhicules, possédant une épaisseur de feuille de

500 à 1800 $\mu$m

constituée par au moins une feuille inférieure ou couche inférieure et par au moins une feuille supérieure ou couche supérieure, dans laquelle au moins une feuille inférieure ou couche inférieure, respectivement au moins une feuille supérieure ou couche supérieure, est constituée par des mélanges d'homopolymère, de copolymère, de terpolymère et/ou de polymère greffé de chlorure de vinyle, de copolymère ou de polymère greffé de styrène, ainsi que par un mélange de plastifiants à base d'un haut polymère plastifiant contenant des groupes polaires, qui forme une phase avec le chlorure de polyvinyle, éventuellement avec une couche de mousse ou un moussage côté envers disposé contre la feuille composite, dans laquelle au moins une feuille supérieure supplémentaire ou couche superficielle supplémentaire, respectivement une feuille inférieure supplémentaire ou couche inférieure supplémentaire, est à base d'un polymère ou d'un mélange de polymères, et un mélange de plastifiants à base de hauts polymères plastifiants contenant des groupes polaires, qui forme une phase avec le chlorure de polyvinyle, dans laquelle le mélange de plastifiants de la feuille inférieure et de la feuille supérieure, présentant des groupes polaires, présente un poids moléculaire supérieur à 100.000 et est constitué par au moins un terpolymère d'alcène ou d'alcényl(en $C_2$-$C_4$)-acrylate d'alkyl(en $C_1$-$C_8$)-monoxyde de carbone, un terpolymère d'alcène ou d'alcényl(en $C_2$-$C_4$)-méthacrylate d'alkyl(en $C_1$-$C_8$)-monoxyde de

14

carbone, un copolymère d'alcène ou d'alcényl(en $C_2$-$C_4$)-acrylate d'alkyl(en $C_1$-$C_8$), un copolymère d'alcène ou d'alcényl(en $C_2$-$C_4$)-méthacrylate d'alkyl(en $C_1$-$C_8$), avec une teneur en acrylate d'alkyle ou en méthacrylate d'alkyle supérieure à 12 % en poids (calculée par rapport à 100 parties en poids du plastifiant respectif contenant des groupes polaires) et avec des groupes acrylate ou méthacrylate, respectivement des groupes d'acrylate d'alkyle ou de méthacrylate d'alkyle, distribués de manière statistique, ainsi qu'éventuellement (dans le cas de terpolymères) des groupes de monoxyde de carbone distribués de manière statistique, caractérisée en ce que, parmi le ou les plastifiants au moins au nombre de deux, contenus dans la feuille supérieure ou couche supérieure et dans la feuille inférieure ou couche inférieure respectives, contenant des groupes polaires et à poids moléculaire élevé, l'un est un plastifiant contenant des groupes de monoxyde de carbone et l'autre est un plastifiant ne contenant pas de monoxyde de carbone, et le rapport de mélange du plastifiant contenant des groupes de monoxyde de carbone au plastifiant ne contenant pas de monoxyde de carbone se situe dans la proportion pondérale

de 2 : 1 à 1 : 2

et en ce que la teneur du plastifiant contenant des groupes polaires ou du mélange de plastifiants contenant des groupes polaires, dans la feuille inférieure ou couche inférieure et dans la feuille supérieure ou couche supérieure, est supérieure à 5 % en poids et inférieure à 50 % en poids (rapportés à 100 % en poids du mélange de polymères), et en ce que le mélange de plastifiants contenant des groupes polaires possédant un poids moléculaire supérieur à 100.000 contient, en outre, au moins un ester d'acide carboxylique aliphatique et/ou aromatique, et le rapport pondéral du mélange de plastifiants contenant des groupes polaires, possédant une teneur en monoxyde de carbone et exempt de monoxyde de carbone aux esters d'acides carboxyliques aliphatiques et/ou aromatiques, s'élève

de 1 : 0,3 à 1 : 1,5

dans laquelle la composition qualitative et/ou quantitative entre la ou les feuilles inférieures ou couches inférieures et la ou les feuilles supérieures ou couches supérieures est différente, ou encore la teneur en pourcent de l'homopolymère, du copolymère, du terpolymère et/ou du polymère greffé de chlorure de vinyle dans la ou les feuilles inférieures ou couches inférieures est inférieure à celle de la ou des feuilles supérieures ou couches supérieures, et/ou en ce que la teneur en pourcent du plastifiant ou du mélange de plastifiants contenant des groupes polaires dans la ou les feuilles inférieures ou couches inférieures, est supérieure à celle dans la ou les feuilles supérieures ou couches supérieures.

2.  Feuille selon la revendication 1, caractérisée en ce que le rapport de mélange du plastifiant contenant des groupes de monoxyde de carbone au plastifiant ne contenant pas de groupes de monoxyde de carbone se situe dans la proportion de 1,5:1 à 1:1,5 et le rapport pondéral du mélange de plastifiants contenant des groupes polaires, possédant une teneur en monoxyde de carbone et de plastifiants exempts de monoxyde de carbone, aux esters d'acides carboxyliques aliphatiques et/ou aromatiques, s'élève de 1:0,5 à 1:1,2.

3.  Feuille selon les revendications 1 à 2, caractérisée en ce que la feuille supérieure ou couche supérieure est constituée (rapportés à 100 % en poids de polymère) par
20 - 85 % en poids
d'un homopolymère, d'un copolymère, d'un terpolymère et/ou d'un polymère greffé de chlorure de vinyle et/ou d'alliages à base de polychlorure de vinyle, par
40 - 15 % en poids
d'un terpolymère d'alcène ou d'alcényl(en $C_2$-$C_4$)-acrylate d'alkyl(en $C_1$-$C_8$)-monoxyde de carbone, d'un terpolymère d'alcène ou d'alcényl(en $C_2$-$C_4$)-méthacrylate d'alkyl(en $C_1$-$C_8$)-monoxyde de carbone, d'un copolymère d'alcène ou d'alcényl(en $C_2$-$C_4$)-acrylate d'alkyl(en $C_1$-$C_8$), d'un copolymère d'alcène ou d'alcényl(en $C_2$-$C_4$)-méthacrylate d'alkyl(en $C_1$-$C_8$), de préférence d'un terpolymère d'éthylène-acrylate de butyle-monoxyde de carbone, d'un terpolymère d'éthylène-acrylate d'hexyle-monoxyde de carbone, d'un copolymère d'éthylène-acrylate de butyle, d'un copolymère d'éthylène-acrylate d'hexyle, contenant des groupes polaires, qui présente des groupes acrylate ou méthacrylate distribués de manière statistique, ainsi qu'éventuellement (dans le cas de terpolymères) des groupes de monoxyde de carbone distribués de manière statistique et une teneur en acrylate d'alkyle supérieure à 12 % en poids (calculée par rapport à 100 parties en poids du plastifiant respectif contenant des groupes polaires) et/ou d'un terpolymère d'éthylène-acétate de vinyle-monoxyde de carbone et/ou d'un copolymère d'éthylène-acétate de vinyle qui peuvent être le cas échéant remplacés en partie par un plastifiant ou par un mélange de plastifiants et/ou par un ester d'acide carboxylique aliphatique ou aromatique, par un diester, par un polyester ou par un ester d'acide polycarboxylique, par un ester de l'acide adipique, par un ester de l'acide trimellitique et/ou par la polycaprolactone, et par

40 - 0 % en poids

d'un copolymère et/ou d'un polymère greffé d'acrylonitrile-butadiène-styrène(ABS), d'un polymère greffé et/ou d'un copolymère à base de styrène, d'acrylonitrile et/ou d'anhydride maléique et/ou d'acrylonitrile-styrène-ester acrylique (ASA) et/ou d'un copolymère de styrène-acrylonitrile (SAN) et/ou de styrène-anhydride maléique-butadiène, ou encore contient ce mélange ou cet alliage.

4. Feuille selon les revendications 1 à 3, caractérisée en ce que la feuille composite constituée par au moins une feuille inférieure ou couche inférieure et par au moins une feuille supérieure ou couche supérieure contient au moins une feuille inférieure ou couche inférieure qui est constituée (rapportés à 100 % en poids de polymère) par

15 - 45 % en poids

d'un homopolymère, d'un copolymère, d'un terpolymère et/ou d'un polymère greffé de chlorure de vinyle et/ou d'alliages à base de polychlorure de vinyle, par

17 - 45 % en poids

d'acrylonitrile-butadiène-styrène (ABS), dans laquelle le copolymère et/ou le polymère greffé d'acrylonitrile-butadiène-styrène (ABS) sont remplacés par un polymère greffé et/ou par un copolymère à base de styrène, d'acrylonitrile et/ou d'anhydride maléique (rapportés au ABS mis en oeuvre), à raison de plus de 10 % en poids, par

38 - 10 % en poids

d'un plastifiant contenant des groupes polaires, contenant ou constitué par au moins un terpolymère d'alcène ou d'alcényl(en $C_2$-$C_4$)-acrylate d'alkyl(en $C_1$-$C_8$)-monoxyde de carbone, un terpolymère d'alcène ou d'alcényl(en $C_2$-$C_4$)-méthacrylate d'alkyl(en $C_1$-$C_8$)-monoxyde de carbone, un copolymère d'alcène ou d'alcényl(en $C_2$-$C_4$)-acrylate d'alkyl(en $C_1$-$C_8$), un copolymère d'alcène ou d'alcényl(en $C_2$-$C_4$)-méthacrylate d'alkyl(en $C_1$-$C_8$), avec une teneur en acrylate d'alkyle ou une teneur en méthacrylate d'alkyle de plus de 12 % en poids (calculée par rapport à 100 parties en poids du plastifiant respectif contenant des groupes polaires) et avec des groupes acrylate ou méthacrylate, respectivement des groupes d'acrylate d'alkyle ou de méthacrylate d'alkyle, distribués de manière statistique, ainsi qu'éventuellement (dans le cas de terpolymères) des groupes de monoxyde de carbone distribués de manière statistique, de préférence un terpolymère d'éthylène-acrylate de butyle-monoxyde de carbone, un terpolymère d'éthylène-acrylate d'hexyle-monoxyde de carbone, un copolymère d'éthylène-acrylate de butyle, un copolymère d'éthylène-acrylate d'hexyle, par

15 - 0 % en poids

d'au moins un copolymère du styrène, d'acrylate et/ou de méthacrylate, par

15 - 0 % en poids

d'au moins un agent de modification partiellement réticulé et/ou élastomère.

5. Feuille selon les revendications 1 à 4, caractérisée en ce que la feuille composite, constituée par au moins une feuille inférieure ou couche inférieure et par au moins une feuille supérieure ou couche supérieure, contient au moins une feuille inférieure ou couche inférieure qui est constituée (rapportés à 100 % en poids de polymère) par

20 - 35 % en poids

d'un homopolymère, d'un copolymère, d'un terpolymère et/ou d'un polymère greffé de chlorure de vinyle et/ou d'alliages à base de polychlorure de vinyle, par

20 - 40 % en poids

d'acrylonitrile-butadiène-styrène (ABS), dans laquelle le copolymère et/ou le polymère greffé d'acrylonitrile-butadiène-styrène (ABS) sont remplacés par un polymère greffé et/ou par un copolymère constitué par de l'acrylonitrile-styrène-ester acrylique (ASA) et/ou par un copolymère de styrène-acrylonitrile (SAN) et/ou par du styrène-anhydride maléique-butadiène (rapportés au ABS mis en oeuvre), à raison de jusque 40 à 100 % en poids, par

35 - 15 % en poids

d'un plastifiant contenant des groupes polaires, contenant ou constitué par au moins un terpolymère d'alcène ou d'alcényl(en $C_2$-$C_4$)-acrylate d'alkyl(en $C_1$-$C_8$)-monoxyde de carbone, un terpolymère d'alcène ou d'alcényl(en $C_2$-$C_4$)-méthacrylate d'alkyl(en $C_1$-$C_8$)-monoxyde de carbone, un copolymère d'alcène ou d'alcényl(en $C_2$-$C_4$)-acrylate d'alkyl(en $C_1$-$C_8$), un copolymère d'alcène ou d'alcényl(en $C_2$-$C_4$)-méthacrylate d'alkyl(en $C_1$-$C_8$), avec une teneur en acrylate d'alkyle ou une teneur en méthacrylate d'alkyle de plus de 12 % en poids (calculée par rapport à 100 parties en poids du plastifiant respectif contenant des groupes polaires) et avec des groupes acrylate ou méthacrylate, respectivement des groupes d'acrylate d'alkyle ou de méthacrylate d'alkyle, distribués de manière statistique, ainsi qu'éventuellement (dans le cas de terpolymères) des groupes de monoxyde de carbone distribués de manière statistique, de préférence un terpolymère d'éthylène-acrylate de butyle-monoxyde de carbone, un terpolymère d'éthylène-acrylate d'hexyle-monoxyde de carbone, un copolymère d'éthylène-acrylate de butyle, un copolymère d'éthylène-acrylate d'hexyle, par

12,5 - 5 % en poids

d'un copolymère de styrène-anhydride maléique (SMA), d'un copolymère d'ester méthacrylique-acrylique et/ou d'un copolymère de styrène-acrylonitrile, et/ou par

12,5 - 5 % en poids

d'un copolymère d'ester acrylique et/ou d'un copolymère d'acrylonitrile-butadiène.

6. Feuille selon les revendications 1 à 5, caractérisée en ce que la feuille composite contient au moins une feuille supérieure ou couche supérieure qui est constituée (rapportés à 100 % de polymère) par

15 - 80 % en poids

d'un homopolymère, d'un copolymère, d'un terpolymère et/ou d'un polymère greffé de chlorure de vinyle et/ou d'alliages à base de polychlorure de vinyle, par

30 - 0 % en poids

de polymère greffé et/ou de copolymère à base de styrène, d'acrylonitrile et/ou d'anhydride maléique, de préférence à base de ou constitué par de l'acrylonitrile-styrène-ester acrylique (ASA) et/ou un copolymère de styrène-acrylonitrile (SAN) et/ou du styrène-anhydride maléique-butadiène, qui peut éventuellement contenir des quantités pondérales minimes (quantités pondérales allant jusqu'à 4 % en poids) de copolymère et/ou de polymère greffé d'acrylonitrile-butadiène-styrène (ABS), par

40 - 20 % en poids

d'un mélange de plastifiants contenant des groupes polaires, par

10 - 0 % en poids

d'au moins un copolymère du styrène, d'acrylate et/ou de méthacrylate et/ou par

5 - 0 % en poids

d'au moins un agent de modification partiellement réticulé et/ou élastomère.

7. Feuille selon les revendications 1 à 6, caractérisée en ce que la ou les feuilles ou couches de feuilles, rapportées à 100 parties en poids du mélange de polymères ou de l'alliage de polymères, contiennent

2 - 20 parties en poids

d'un ou plusieurs agents de lubrification, stabilisateurs et/ou antioxydants,

0 - 50 parties en poids

d'au moins une matière de charge, d'au moins un agent qui rend ignifuge, d'au moins un colorant ou un pigment de coloration, ainsi que

0 - 12 parties en poids

d'au moins un plastifiant faiblement volatil, de préférence résistant à la migration.

8. Feuille selon les revendications 1 à 7, caractérisée en ce que la teneur en pourcent du plastifiant ou du mélange de plastifiants contenant des groupes polaires dans la ou les feuilles inférieures ou couches inférieures est supérieure à celle dans la ou les feuilles supérieures ou couches supérieures.

9. Feuille selon les revendications 1 à 8, caractérisée en ce que la feuille superficielle est enduite d'une couche de laque ou d'une enduction en matière synthétique à base de résines acrylate, de résines de polychlorure de vinyle-acrylate, de résines de polyuréthanne et/ou de résines époxyde sur leur couche superficielle libre.

10. Procédé pour la fabrication d'une feuille, dans lequel on chauffe et on plastifie le mélange de matières synthétiques de la feuille supérieure et/ou inférieure dans une extrudeuse ou dans d'autres dispositifs de plastification connus en soi, en maintenant la composition de la feuille selon les revendications 1 à 9, caractérisé en ce qu'on traite la composition en matière synthétique entre

150 et 210 °C

(température de la composition) pour obtenir des feuilles et/ou en ce qu'on déforme la composition contenant des matières synthétiques, chauffée à

150 - 210 °C, de préférence

160 - 200 °C,

à l'aide d'une calandre à cylindres multiples, de préférence une calandre à trois ou quatre cylindres, pour obtenir une bande de feuille, dans lequel le réglage de la température du premier, du deuxième et du troisième cylindres se situe de préférence entre 170 et 200 °C, celui du quatrième cylindre entre 160 et 180 °C.

11. Procédé selon la revendication 10, caractérisé en ce qu'on contre-colle à chaud les bandes individuelles sur ce que l'on appelle une calandre d'estampage et/ou, dans le cas de feuilles multicouches ou de feuilles composites, on munit au préalable la feuille supérieure ou couche supérieure d'une couche superficielle ou d'une couche de laque, et par la suite, on l'applique sur la feuille inférieure ou sur le composite ou encore sur le composite prêt à l'emploi, conformément à l'estampage en question.